# EUROPEAN PATENT APPLICATION

(11) **EP 4 553 193 A1**
(43) Date of publication of application: **14.05.2025**
(21) Application number: 23209153.8
(22) Date of filing: 10.11.2023
(51) Int. Cl.: C25B 1/04, C25B 1/042, C25B 9/70, C25B 15/08, C10G 2/00, C01B 3/36

(54) **INTEGRATED PRODUCTION OF SYNGAS FROM CARBON DIOXIDE AND WATER**

(71) Applicant: BP P.L.C., London SW1Y 4PD (GB)
(72) Inventor: PATERSON, Alexander James, London, SW1Y 4PD (GB); TAYLOR, Dave, London, SW1Y 4PD (GB)
(74) Representative: Mathys & Squire

(57) **Abstract**

The present disclosure relates generally to integrated processes for producing H₂ and CO from carbon dioxide and water through electrolysis, in particular using an electrolyzer cell. In particular, the disclosure relates to a process comprising: providing a electrolysis feed stream comprising carbon dioxide; electrolyzing carbon dioxide of the electrolysis stream in an electrolyzer cell to form carbon monoxide; electrolyzing water to form hydrogen gas; providing a H₂/CO stream comprising at least a portion of the carbon monoxide from the electrolysis of carbon dioxide and at least a portion of the hydrogen gas from the electrolysis of water to a Fischer-Tropsch reactor.

## Description

### BACKGROUND OF THE DISCLOSURE

### FIELD

The present disclosure relates to integrated processes for the Fischer-Tropsch synthesis of hydrocarbons from carbon dioxide.

### TECHNICAL BACKGROUND

The conversion of synthesis gas (i.e., a mixture of carbon monoxide and hydrogen, also known as syngas) into hydrocarbons by the Fischer-Tropsch process has been known for decades, but has historically lagged in performance compared to other hydrocarbon synthesis techniques. The growing importance of alternative energy sources has resulted in renewed interest in the Fischer-Tropsch (FT) process as it allows a direct and environmentally-acceptable route to high-quality fuels and feedstock chemicals.

FT processes are known for producing linear hydrocarbons, as well as oxygenates, that can be useful in fuels and can also serve as valuable feedstock chemicals. The hydrocarbon fuel derived from FT processes is typically better able to meet increasingly stringent environmental regulations compared to conventional refinery-produced fuels, as FT-derived fuels typically have lower contents of sulfur, nitrogen, and aromatic compounds, which contribute to the emission of potent pollutants such as SO₂, NOₓ, and particulates. Products derived from FT processes often have a higher octane rating than hydrocarbons and thus burn more completely, thereby reducing the environmental impact of such a fuel. Alcohols, olefins and other oxygenates obtained may also be used as reagents in other processes, such as in the synthesis of lubricants.

Synthesis gas (i.e., syngas) is conventionally produced from fossil fuel sources, primarily through the gasification of coal. However, syngas suffers from poor handling properties, as it must be transported in the low-density vapor phase, or liquefied under high pressure.

Accordingly, there exists a need to develop improved protocols for the production and handling of syngas and subsequent use of syngas in conversion reactors.

### SUMMARY

The inventors have identified processes to efficiently convert CO₂ to hydrocarbons through the use of an intermediate electrolyzer cell. Advantageously, this process can proceed at lower temperature as compared to conventional synthetic routes and does not require a reverse water-gas shift (rWGS) process.

Thus, in one aspect, the present disclosure provides a process for producing an H₂/CO stream comprising hydrogen and carbon monoxide, the process comprising:
providing an electrolysis feed stream comprising carbon dioxide;
electrolyzing carbon dioxide of the electrolysis feed stream in an electrolyzer cell to form carbon monoxide;
electrolyzing water to form hydrogen gas;
providing a H₂/CO stream comprising at least a portion of the carbon monoxide from the electrolysis of carbon dioxide and at least a portion of the hydrogen gas from the electrolysis of water to a syngas conversion reactor (e.g., a Fischer-Tropsch reactor).

In various embodiments of the disclosure as described herein, the electrolyzer cell comprises one or more of a solid oxide electrolyzer cell, a proton exchange membrane (PEM) electrolyzer cell, an alkaline electrolyzer cell, and an anion exchange membrane (AEM) electrolyzer cell. In various particular embodiments, the electrolyzer cell is a solid oxide electrolyzer cell.

Other aspects of the disclosure will be apparent to those skilled in the art in view of the description that follows.

### BRIEF DESCRIPTION OF THE DRAWINGS

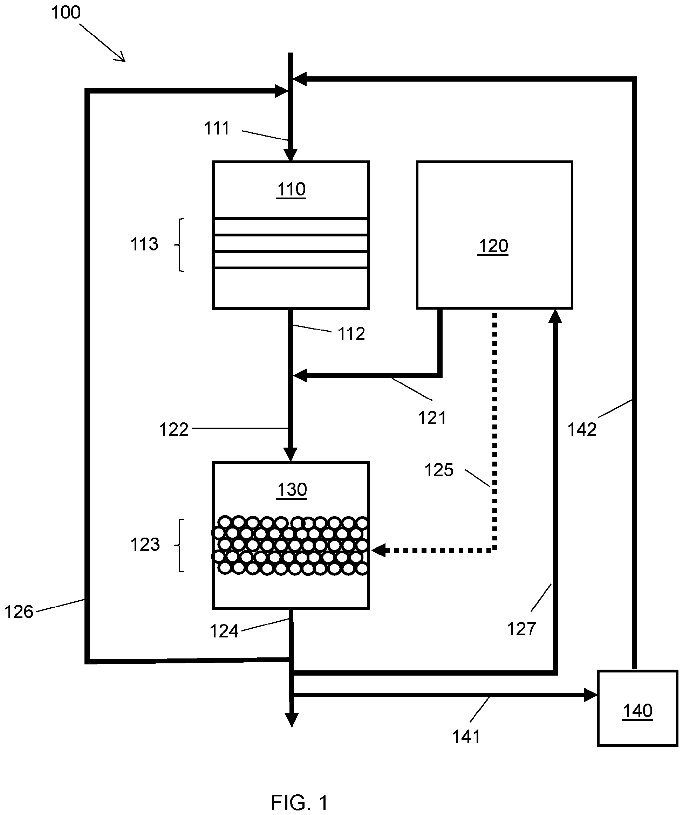

FIG. 1 provides process schematics according to example embodiments of the disclosure.

### DETAILED DESCRIPTION

The present disclosure relates to techniques for preparing syngas from carbon dioxide. Carbon dioxide is a widely available gas (currently present in the atmosphere at about 400 ppm) that is inert to many transformations. Additionally, the tendency of carbon dioxide to absorb infrared radiation has led to its designation as a greenhouse gas. Thus, there is a need to develop economical processes that utilize carbon dioxide, especially waste carbon dioxide that would otherwise be added to the ever-rising concentration of carbon dioxide in the atmosphere. Carbon dioxide is produced by many industries where it can be captured as a point source to be used as a feedstock, for example from facilities involved in steel production, fossil fuel power generation, cement production, fermentation processes or fertilizer production. Carbon dioxide may also be sourced from direct air capture projects. Advantageously, hydrocarbon synthesis processes that use waste carbon dioxide as a feed have the potential to be low-carbon, carbon neutral, or even have a negative carbon footprint. One way to achieve this is to transform carbon dioxide into carbon monoxide through electrochemical means, such as the electrolyzer cell (e.g., a solid oxide electrolyzer cell, a proton exchange membrane (PEM) electrolyzer cell, an alkaline electrolyzer cell, and/or an anion exchange membrane (AEM) electrolyzer cell) disclosed herein. Hydrogen is often produced from fossil sources, but may instead be generated through water electrolysis, including electrolysis powered by renewables sources of energy. Electrolysis-generated carbon monoxide and electrolysis-derived hydrogen may then be combined to for a mixture of H₂ and CO. Mixtures of H₂ and CO are commonly referred to as "syngas" and find wide-ranging utility. For example, syngas can then be utilized in a Fischer-Tropsch synthesis reaction in order to generate hydrocarbons. For example, some Fischer-Tropsch processes operate at a H₂:CO ratio of 2:1 or greater, such as at 2.2:1 or 3:1. In such cases, the H₂ and CO mixture from SOEC-generated carbon monoxide and electrolysis-derived hydrogen may be supplemented by a hydrogen source, such as from a recycle stream or green hydrogen produced with renewable energy, to form the Fischer-Tropsch reaction mixture.

Accordingly, in one aspect, the present disclosure provides a process for producing an H₂/CO stream comprising hydrogen and carbon monoxide, the process comprising:
providing an electrolysis feed stream comprising carbon dioxide;
electrolyzing carbon dioxide of the electrolysis feed stream in an electrolyzer cell to form carbon monoxide;
electrolyzing water to form hydrogen gas;
providing a H₂/CO stream comprising at least a portion of the carbon monoxide from the electrolysis of carbon dioxide and at least a portion of the hydrogen gas from the electrolysis of water to a syngas conversion reactor (e.g., Fischer-Tropsch reactor).

As used herein, a "feed stream" is used to mean the total material input to a process step, e.g., CO₂ electrochemical reduction, water electrolysis, or a syngas conversion reaction such as a Fischer-Tropsch reaction, regardless of whether provided in a single physical stream or multiple physical streams, and whether through a single inlet or multiple inlets. Similarly, a "product stream" is used to mean the total material output from a process step, regardless of whether provided in a single physical stream or multiple physical streams, and whether through a single reactor outlet or multiple reactor outlets.

The present inventors have noted that carbon dioxide is a chief input of carbon to the processes described herein, and that carbon dioxide can advantageously be provided by a variety of sources. Importantly, at least part of the carbon dioxide of the electrolysis feed stream (e.g., at least 50%, at least 75%, at least 90% or at least 95%) can come from a renewable source. For example, in various embodiments, the carbon dioxide of the electrolysis feed stream comprises one or more of captured carbon dioxide, carbon dioxide from biogas, carbon dioxide from an emission source, and carbon dioxide from biomass gasification. In various embodiments, the carbon dioxide of the electrolysis feed stream comprises one or more of captured carbon dioxide, carbon dioxide from biogas, carbon dioxide from an emission source, and carbon dioxide from biomass gasification.

Carbon dioxide is a common waste material, and often desirable to be removed from waste streams rather than be vented to the atmosphere. Such capture of carbon dioxide is critical to the implementation of many renewable initiatives as it serves to lower the carbon footprint of the associated process. Advantageously, the carbon dioxide utilized in the processes described herein may be carbon dioxide collected from the atmosphere or that would otherwise have been released into the atmosphere, e.g., from a combustion or other industrial process. The carbon dioxide may be captured, where it is collected or absorbed after release from an industrial process, or harvested directly from the atmosphere. Methods of carbon dioxide capture are known to those of skill in the art.

In various embodiments, at least a portion of the CO₂ of the electrolysis feed stream is from direct air capture. In some embodiments as described herein, a majority (i.e., at least 50 mol%) of the CO₂ of the electrolysis feed stream is from direct air capture. In some embodiments as described herein, substantially all (e.g., at least 90 mol%) of the CO₂ of the electrolysis feed stream is from direct air capture. For example, in some embodiments, the CO₂ of the electrolysis feed stream comprises at least 50 mol% (e.g., at least 75 mol%, at least 90 mol%, or at least 95 mol%) CO₂ from direct air capture.

In various embodiments, at least a portion of the CO₂ of the electrolysis feed stream is from biogas. Biogas is produced by anaerobic digestion of organic matter (e.g., animal waste, food waste, plant matter) by microorganisms and includes substantial amounts of CO₂ and methane. In some embodiments as described herein, a majority (i.e., at least 50 mol%) the CO₂ of the electrolysis feed stream is from biogas. In some embodiments as described herein, substantially all (e.g., at least 90 mol%) of the CO₂ of the electrolysis feed stream is from biogas. For example, in some embodiments, the CO₂ of the electrolysis feed stream comprises at least 50 mol% (e.g., at least 75 mol%, at least 90 mol%, or at least 95 mol%) CO₂ from biogas. One source of biomass is agricultural products in the form of dedicated energy crops such as switchgrass, miscanthus, bamboo, sorghum, tall fescue, kochia, wheatgrass, poplar, willow, silver maple, eastern cottonwood, green ash, black walnut, sweetgum, and sycamore. Another biomass source is agricultural waste or agricultural crop residue. Conventional agricultural activities, including the production of food, feed, fiber, and forest products, generate large amounts of waste plant material. Examples of such materials include corn stover, wheat straw, oat straw, barley straw, sorghum stubble, and rice straw. A third biomass source is through forestry residues left after timber operations. Biomass may also be in the form of commercial waste, industrial waste, sewage sludge, and municipal waste, which includes commercial and residential garbage, including yard trimmings, paper and paperboard, plastics, rubber, leather, textiles, and food waste. Additional sources of agricultural biomass will be apparent to one of skill in the art as dictated by local availability, economics, and process compatibility.

To generate carbon dioxide from a carbon-containing material, such as biomass, the material is typically subjected to gasification. Gasification involves heating the material under controlled conditions to generate gaseous streams of carbon monoxide, hydrogen, and carbon dioxide. Controlled amounts of other reactants, such as oxygen and/or steam, may be used to tune the process. Gasification conditions are tuned in accordance with the carbon-containing material being gasified in order to efficiently produce gaseous products. In various embodiments, the carbon dioxide of the electrolysis feed stream includes carbon dioxide from gasification of biomass, e.g., at least 50%, at least 75%, at least 90% or at least 95% of the carbon dioxide is from gasification of biomass. The biomass may be any source as described above, or from multiple sources may be combined.

In various embodiments, such as when at least part of the CO₂ of the electrolysis feed stream is from biogas, the process as described herein may operate with significant amounts of methane, which is generally inert under the electrolyzer conditions. For example, in various embodiments wherein the electrolysis feed stream comprises methane, such as from biogas, the electrolysis feed stream comprises methane in an amount in the range of 10-70 mol%, or 10-50 mol%, or 20-70 mol%, or 20-50 mol%, or 30-70 mol%, or 30-50 mol%. In other embodiments as described herein, when the electrolysis feed stream comprises biogas, the methane in the biogas may be separated out before being added to the electrolysis feed stream. Accordingly, in some embodiments, the process as described herein may operate with low amounts of unreacted methane. For example, in certain embodiments as otherwise described herein, the electrolysis feed stream comprises methane in an amount in the range of 0.1 to 10 mol%, or 0.1 to 5 mol%, or 0.1 to 1 mol%.

In various embodiments as described herein, at least part of the CO₂ of the electrolysis feed stream is from a CO₂ emission source. Carbon dioxide is often scrubbed from industrial effluent, especially processes that generate large amounts of carbon dioxide as a byproduct. As used herein, the source of this carbon dioxide byproduct from industrial processes is referred to as a CO₂ emission source. In some embodiments as described herein, a majority (i.e., at least 50 mol%) the CO₂ of the electrolysis feed stream is from a CO₂ emission source. In some embodiments as described herein, substantially all (e.g., at least 90 mol%) of the CO₂ of the electrolysis feed stream is from a CO₂ emission source. For example, in some embodiments, the CO₂ of the electrolysis feed stream comprises at least 50 mol% (e.g., at least 75 mol%, at least 90 mol%, or at least 95 mol%) CO₂ from a CO₂ emission source. The CO₂ emission source is not particularly limited and may derived from any industrial production known in the art. For example, in some embodiments as described herein, the CO₂ emission source is a manufacturing plant, a bioethanol plant, a CO₂ producing fermentation plant, a steel plant, or a cement plant. Accordingly, in various embodiments as otherwise described herein, at least part of the CO₂ of the electrolysis feed stream (e.g., at least 50%, at least 75%, at least 90% or at least 95%) is captured from a manufacturing plant, e.g., a bioethanol plant, a steel plant or a cement plant. In some embodiments as described herein, the CO₂ emission source is a point source from a fermentation, manufacturing, or other industrial process. The point source may be in the form of a chimney or vent or other structure for containing and/or transporting CO2 known in the art.

As noted above, renewable sources can be used to provide CO₂ to the claimed processes. For example, biomass is an attractive source of renewable carbon dioxide for use in the processes described herein. Accordingly, in various embodiments as otherwise described herein, the at least a portion of the CO₂ of the electrolysis feed stream is derived from a renewable source. For example, in particular embodiments, at least a portion (e.g., at least 50%, at least 75%, at least 90% or at least 95%) of the CO₂ of the electrolysis feed stream is derived from a renewable source.

Conventional H₂ gas is most commonly derived from natural gas, often through steam reforming of methane, hydrocarbon partial oxidation, and/or coal gasification. However, each of these methods, as conventionally performed, release significant amounts of CO₂ into the atmosphere and rely on fossil fuels as a starting material and/or energy source. In contrast, other sources of H₂ are known which are preferable from an environmental standpoint. As known in the art, hydrogen can be provided with color-based names according to its source of production. Examples of types of hydrogen include green hydrogen, blue hydrogen, grey hydrogen, black hydrogen, brown hydrogen, pink hydrogen, turquoise hydrogen, yellow hydrogen, and/or white hydrogen.

As otherwise described herein, the presently disclosed process includes the electrolysis of water to form hydrogen gas. Numerous methods of electrolysis are known in the art. For example, electrolysis may be performed on pure water to produce hydrogen gas and oxygen gas, or on other solutions, such as saline solution, to produce hydrogen gas and another product (e.g., chlorine gas). In particular embodiments, the hydrogen is formed through the electrolysis of a saline solution. Water electrolysis is described further in U.S. Patent No. 4,312,720, U.S. Patent No. 4,021,323, and U.S. Patent No. 4,094,751, each of which is incorporated by reference in their entirety.

The electrolysis feed stream comprises CO₂ for subsequent contacting with a electrolyzer cell for the production of CO. Accordingly, in various embodiments as otherwise described herein, the electrolysis feed stream includes at least 5 mol% CO₂. For example, in various embodiments, the electrolysis feed stream includes at least 10 mol% CO₂, e.g., at least 15 mol% CO₂.

In some embodiments, the electrolysis feed stream comprises other gases in addition to CO₂. For example, in various embodiments, the electrolysis feed stream further comprises one or more of CO, CH₄, and N₂ e.g., one or more of CH₄ and N₂. For example, in particular embodiments, at least 50 vol% of the of the electrolysis feed stream is carbon dioxide, methane and/or nitrogen, e.g., in a total amount of at least 60 vol%, at least 70 vol%, at least 80 vol%, or at least 90 vol%. However, in various embodiments, the electrolysis feed stream comprises no more than 20 vol% carbon monoxide, e.g., no more than 10 vol%, or no more than 5 vol%, or no more than 3 vol%, or no more than 1 vol% carbon monoxide. In various embodiments as described herein, the gases of electrolysis feed steam may be separated out to provide the amounts of carbon dioxide, methane, and/or nitrogen as described herein. For example, in some embodiments as described herein, methane separated from the electrolysis feed stream to provide a feed stream comprising at least 50 vol% carbon dioxide, e.g., at least 60 vol% carbon, dioxide, at least 70 vol% carbon dioxide, at least 80 wt% carbon dioxide, or at least 90 wt% carbon dioxide.

As otherwise described herein, the electrolyzer cell comprises components that allow the electrochemical reduction of CO₂. The electrolyzer cell is not particularly limited and may be selected from any electrolyzer cell suitable to reduce CO₂. Additionally, the electrolyzer cell may include multiple electrolyzer cells (e.g., of the same or different type) suitable to reduce the carbon dioxide of the electrolysis feed. Accordingly, in some embodiments as described herein, the electrolyzer cell comprises one or more of a solid oxide electrolyzer cell, a proton exchange membrane (PEM) electrolyzer cell, an alkaline electrolyzer cell, and an anion exchange membrane (AEM) electrolyzer cell. In other embodiments, the electrolyzer cell includes one type of electrolyzer cell. For example, in some embodiments as described herein, the electrolyzer cell is selected from solid oxide electrolyzer cell, a proton exchange membrane (PEM) electrolyzer cell, an alkaline electrolyzer cell, or an anion exchange membrane (AEM) electrolyzer cell.

In some embodiments as described herein, the electrolyzer cell is a solid oxide electrolyzer cell. As described herein, the solid oxide electrolyzer cell comprises components that allow the electrochemical reduction of CO₂. For example, in various embodiments, when a solid oxide electrolyzer cell is used, the solid oxide electrolyzer cell comprises an anode, a cathode, and a solid oxide electrolyte disposed between the anode and the cathode. The use of solid oxide electrolyzer cells for CO₂ electrolysis is described further in Song, "High-Temperature CO2 Electrolysis in Solid Oxide Electrolysis Cells: Developments, Challenges, and Prospects," Adv. Mat. 31: 1902033 (2019), Kumari, "Carbon dioxide reduction on the composite of copper and praseodymium-doped ceria electrode in a solid oxide electrolysis cells," Ionics 25: 3165-3177 (2019), and Tezel "Electrochemical reduction of CO2 using solid oxide electrolysis cells: insights into catalysis by nonstoichiometric mixed metal oxides," ACS Catal. 12:11456-11471 (2022), each of which is hereby incorporated by reference in its entirety.

Various suitable solid oxide electrolytes are known in the art. For example, in various embodiments, the electrolyte of the solid oxide electrolyzer cell comprises one or more of yttrium-stabilized zirconia, scandia-stabilized zirconia, a ceria-based electrolyte or a lanthanum gallate material.

Various suitable cathodes are known in the art. For example, in various embodiments, the cathode of the solid oxide electrolyzer cell comprises one or more of a doped yttrium-stabilized zirconia (e.g., nickel-doped yttrium-stabilized zirconia); perovskite-type lanthanum strontium manganese, lanthanum strontium manganese chromate, and scandium-doped lanthanum strontium manganese chromate.

Various suitable anodes are known in the art. For example, in various embodiments, the anode of the solid oxide electrolyzer cell comprises one or more of lanthanum strontium manganate and neodymium nickelate.

In some embodiments as described herein, the electrolyzer cell is a PEM electrolyzer cell. As described herein, the PEM electrolyzer cell comprises components that allow the electrochemical reduction of CO₂. For example, in various embodiments, when a PEM electrolyzer cell is used, the PEM electrolyzer cell comprises an anode, a cathode, and a proton-exchange membrane (i.e., a polymer-electrolyte membrane) disposed between the anode and the cathode. Various suitable proton-exchange membranes are known in the art. For example, in various embodiments, the proton-exchange membrane of the PEM electrolyzer cell comprises one or more of a fluoropolymer (e.g., a partially fluorinated polymer) or a polyaromatic polymer. Various suitable cathodes and anodes for the PEM electrolyzer cell are known in the art. For example, the PEM cathode and anode maybe a gas diffusion catalyst. In various embodiments as described herein, the cathode of the PEM includes at least one of platinum, silver, or gold, present as a metal or an oxide. In various embodiments as described herein, the anode of the PEM includes at least one of iridium, ruthenium, nickel, and platinum, present as a metal or an oxide.

In some embodiments as described herein, the electrolyzer cell is an alkaline electrolyzer cell. As described herein, the alkaline electrolyzer cell comprises components that allow the electrochemical reduction of CO₂. For example, in various embodiments, when an alkaline electrolyzer cell is used, the alkaline electrolyzer cell comprises an anode, a cathode, and a liquid alkaline electrolyte solution disposed between the anode and the cathode. Various suitable liquid alkaline electrolyte solutions are known in the art. For example, in various embodiments, the liquid alkaline electrolyte solution of the alkaline electrolyzer cell comprises one or more potassium hydroxide or sodium hydroxide solutions. Various suitable cathodes and anodes for the alkaline electrolyzer cell are known in the art. In various embodiments as described herein, the cathode of the alkaline electrolyzer cell includes at least one of nickel, molybdenum, copper, tin, and silver, present as a metal or an oxide. In various embodiments as described herein, the anode of the alkaline electrolyzer cell includes at least one of nickel, cobalt, and iron, present as a metal or an oxide.

In some embodiments as described herein, the electrolyzer cell is an AEM electrolyzer cell. As described herein, the AEM electrolyzer cell comprises components that allow the electrochemical reduction of CO₂. For example, in various embodiments, when an AEM electrolyzer cell is used, the AEM electrolyzer cell comprises an anode, a cathode, and an anion exchange membrane disposed between the anode and the cathode. Various suitable anion exchange membranes are known in the art. For example, in various embodiments, the anion exchange membranes of the AEM electrolyzer cell comprises one or more of a fluoropolymer (e.g., a partially fluorinated polymer) or a polyaromatic polymer. Various suitable cathodes and anodes for the AEM electrolyzer cell are known in the art. For example, the AEM cathode and anode maybe a gas diffusion catalyst. In various embodiments as described herein, the cathode includes at least one of nickel, molybdenum, platinum, palladium, silver, zinc, copper, ruthenium, carbon, cerium, lanthanum, titanium, iron, and cobalt, present as a metal or an oxide. In various embodiments as described herein, the anode includes at least one of nickel, cobalt, iron, iridium, copper, ruthenium, and present as a metal or an oxide.

In various embodiments as otherwise described herein, the contacting the electrolysis feed stream with the electrolyzer cell is performed at a temperature in the range of 400 °C to 1000 °C, (e.g., in the range of 400°C to 700°C, or 400°C to 800°C, or 400°C to 900°C, or 450°C to 700°C, or 450°C to 800°C, or 450°C to 900°C, or 450°C to 1000°C, or 500°C to 700°C, or 500°C to 800°C, or 500°C to 900°C, or 500°C to 1000°C, or 550°C to 700°C, or 550°C to 800°C, or 550°C to 900°C, or 550°C to 1000°C, or 600°C to 700°C, or 600°C to 800°C). In various embodiments, the contacting the electrolysis feed stream with the electrolyzer cell is performed at a pressure in the range of 0.1 to 60 barg, for example, 1 to 50 barg, 1 barg to 40 bar, 1 to 30 barg, 5 to 60 barg, 5 to 50 barg, 5 to 40 barg, or 5 barg to 30 barg.

As described herein, the contacting of the electrolysis feed stream with the electrolyzer cell advantageously produces CO with high selectivity. Accordingly, in various embodiments as otherwise described herein, the contacting the electrolysis feed stream with the electrolyzer cell is performed with a selectivity for carbon monoxide of at least 50% (e.g., at least 60%, or at least 70%, or at least 80%). Advantageously, the contacting has a low selectivity for other carbonaceous species. In various embodiments as otherwise described herein, the contacting the electrolysis feed stream with the electrolyzer cell is performed with a carbonate and/or oxalate selectivity of no more than 30%, e.g., no more than 25%, or no more than 20%, or no more than 15%, or no more than 10%, or no more than 5%.

As described herein, electrolysis of CO₂ can be performed in a solid oxide electrolyzer cell. Additionally or alternatively, CO₂ electrolysis may also be performed through other electrolysis means, including utilizing aqueous or non-aqueous electrolytes and often near-ambient temperatures. Various techniques for CO₂ electrolysis are known in the art, for examples as described in Jitaru, et al., "Electrochemical reduction of carbon dioxide on flat metallic cathodes," J. Appl. Electrochem. 27: 875-889 (1997), Hori, "Electrochemical CO2 Reduction on Metal Electrodes," Modern Aspects of Electrochemistry, 42: 89-189 (2008), and Park, et al., "Towards the Large-Scale Electrochemical Reduction of Carbon Dioxide," Catalysts, 11: 253 (2021), each of which is hereby incorporated herein by reference in its entirety. Accordingly, in various embodiments as otherwise described herein, the process further comprises providing a electrolysis feed stream comprising carbon dioxide; electrolyzing the electrolysis feed stream (i.e., not in a solid oxide electrolyzer cell) to produce a carbon dioxide electrolysis product stream comprising carbon monoxide and water; and including at least a portion of the carbon monoxide of the carbon dioxide electrolysis product stream in the H₂/CO stream.

In various embodiments, carbon monoxide and/or carbon dioxide from other sources, such as fossil-based sources (e.g., natural gas), may be utilized in admixture with the streams as described herein. For example, in various embodiments as otherwise described herein, the process further comprises providing carbon dioxide from a secondary source (e.g., a fossil source) in the electrolysis feed stream. In various embodiments as otherwise described herein, the process further comprises providing carbon monoxide from a secondary source (e.g., a fossil source) in the H₂/CO stream.

The electrolyzer cells as described herein can be used to for the electrolysis of water in conjunction with carbon dioxide. Accordingly, in various embodiments as otherwise described herein, the electrolysis feed stream further comprises water, and wherein at least a portion of the electrolysis of water is performed in the electrolyzer cell. For example, in some embodiments as described herein, at least a portion of the electrolysis of water and at least a portion of the electrolysis of carbon dioxide is performed in the same (e.g., in a single) electrolyzer cell. Additionally or alternatively, water electrolysis may be performed in a separate electrolysis cell. Co-electrolysis of carbon dioxide and water is further described in Anelli, "Co-electrolysis of steam and carbon dioxide in large area solid oxide cells based on infiltrated mesoporous oxygen electrodes," J. Power Sources 478: 228774 (2020), and Ebbesen, "Co-electrolysis of steam and carbon dioxide in solid oxide cells," J. Electrochem. Soc. 159(8):F482-F489 (2012). Accordingly, in various embodiments as otherwise described herein, at least a portion of the electrolysis of water is performed in a water electrolyzer separate from the electrolyzer cell.

In various embodiments, hydrogen from other sources, such as fossil-based sources (e.g., natural gas), may be utilized in admixture with the streams as described herein. For example, in various embodiments as otherwise described herein, the process further comprises providing hydrogen from a secondary source (e.g., a fossil source) in the H₂/CO stream.

Advantageously, the H₂/CO stream may be utilized for a variety of downstream processes, including conversion into useful chemical products. For example, in various embodiments as otherwise described herein, the H₂/CO stream is provided to a Fischer-Tropsch synthesis reactor. However, the H₂/CO stream may be provided to other syngas conversion reactors, e.g., a methanol synthesis reactor, chemicals synthesis, a turbine for use as fuel, or a metal reduction reactor (e.g., an iron reduction reactor). Accordingly, the H₂/CO ratio may be tuned for the process in questions. In particular embodiments, for example in embodiments wherein the H₂/CO stream is directed to a Fischer-Tropsch reactor, the H₂/CO stream has a H₂:CO ratio in the range of 1:1 to 3:1, e.g., 1.5:1 to 3:1. For example, in various embodiments the H₂/CO stream may have a molar H₂:CO ratio in the range of 1.2:1 to 2.5:1, or in the range of 1.4:1 to 2.5:1, or in the range of 1.6:1 to 2.2:1.

In various embodiments as otherwise described herein, the process further comprises separating water from the H₂/CO stream or from a carbon-monoxide-containing effluent of the solid oxide electrolyzer. In embodiments wherein a Fischer-Tropsch synthesis reactor is the syngas conversion reactor, the process can further comprise separating water from a hydrocarbon product stream from the Fischer-Tropsch synthesis reactor.

In embodiments in which water is separated from the process steps as otherwise described herein, the water may be disposed of as waste, or recycled into other processes. For example, in various embodiments, the separated water is directed to an electrolysis reactor for the formation of H₂ gas, e.g., for use in this integrated process or in other processes. In various embodiments, the separated water is subjected to a purification step before introduction into the electrolysis reactor. Accordingly, in various embodiments, the process may further comprise recycling the separated water, including one or more of the separated water to the water electrolyzer. In various embodiments, the H₂/CO stream has a water content of no more than 10 wt%. The water content of the H₂/CO stream may be separated from the stream and used as a feed for other processes. For example, the water content of the H₂/CO stream can be separated (and/or cleaned) from the H₂/CO stream to provide a portion of the feed for the electrolysis of water to form hydrogen gas, as described herein.

In various embodiments, such as when the electrolysis feed stream comprises biogas, the process as described herein may operate with significant amounts of unreacted methane and/or carbon dioxide. Accordingly, in various embodiments as otherwise described herein, the H₂/CO stream comprises methane in an amount in the range of 0.1 vol% to 50 vol%, e.g., in the range of 1 vol% to 50 vol%, or 5 vol% to 40 vol%. In various embodiments as otherwise described herein, the H₂/CO stream comprises carbon dioxide in an amount in the range of 0.1 vol% to 50 vol%, e.g., in the range of 1 vol% to 50 vol%, or 5 vol% to 40 vol%. In other embodiments as described herein, when the electrolysis feed stream comprises biogas, the electrolysis feed stream may separate out methane present in the stream before electrolyzing the electrolysis feed stream in a solid oxide electrolyze cell. Accordingly, in some embodiments, the process as described herein may operate with low amounts of unreacted methane. For example, in various embodiments as otherwise described herein, the H₂/CO stream comprises methane in an amount in the range of 0.1 to 10 vol%, or 0.1 to 5 vol%, or 0.1 to 1 vol%.

In various embodiments as otherwise described herein, the process further comprises reacting a light hydrocarbon stream with oxygen (e.g., in a partial oxidation reactor, in a steam methane reforming reactor, or in an autothermal reforming reactor) to produce an oxidation product stream comprising carbon monoxide and hydrogen. For example, catalytic partial oxidation of hydrocarbon feedstocks is described in European Patent Application Publication no. 0303438 A1, which is hereby incorporated herein by reference in its entirety. Accordingly, in various embodiments as otherwise described herein, the process further comprises reacting a light hydrocarbon stream with water in a steam reforming reactor to produce a reforming product stream comprising carbon monoxide. In various embodiments, the process further comprises comprising reacting a light hydrocarbon stream with water and oxygen (e.g., in a combined steam reforming reactor and partial oxidation reactor, such as an autothermal reformer) to produce a reforming product stream comprising carbon monoxide and hydrogen. In various embodiments, the process further comprises including at least a portion of the carbon monoxide of the reforming product stream and/or at least a portion of the hydrogen of the reforming product stream to the H₂/CO stream.

As described herein, oxygen may be advantageously reacted with a light hydrocarbon stream. In some embodiments, wherein the process comprises electrolyzing water to produce hydrogen and oxygen, and wherein at least a portion of the oxygen from the electrolysis is provided to the reaction of the light hydrocarbon stream with oxygen. In particular embodiments, wherein electrolyzing carbon dioxide of the electrolysis feed stream in a electrolyzer cell forms oxygen, at least a portion of the oxygen from the electrolyzing carbon dioxide of the electrolysis feed stream is provided to the reaction of the light hydrocarbon stream with oxygen. Advantageously, in various embodiments, the partial oxidation produces energy. Accordingly, in such embodiments, the process further comprising directing the energy to at least one of a Fischer-Tropsch synthesis, a separation process, or an electrolysis process.

In some embodiments, the H₂/CO stream is directed to a Fischer-Tropsch synthesis reactor. The Fischer-Tropsch process is typically used to make C₅₊ hydrocarbons, for example, unsubstituted C₅₊ hydrocarbons (e.g., alkanes and alkenes) and oxygenated C5+ hydrocarbons (e.g., C₅₊ alcohols, aldehydes, ketones, carboxylic acids). The Fischer-Tropsch reaction as described herein is desirably operated with a high selectivity for hydrocarbons. For example, in various embodiments as otherwise described herein, the process further comprises:
providing an H₂/CO stream containing hydrogen and carbon monoxide (e.g., a stream produced by the process as otherwise described herein);
contacting the H₂/CO stream with a Fischer-Tropsch catalyst (e.g., in a Fischer-Tropsch reactor) to produce a Fischer-Tropsch product stream comprising C₅₊ hydrocarbons.

Advantageously, in various embodiments, the contacting is performed with a C₅₊ selectivity of at least 30%, e.g., at least 50%, or at least 70%. The hydrocarbon composition of the Fischer-Tropsch product stream can vary depending on identify of catalyst and process conditions as known in the art. In various embodiments, the hydrocarbon composition comprises hydrocarbons (e.g., linear hydrocarbons, branched hydrocarbons, saturated or unsaturated hydrocarbons) and oxygenated derivatives thereof. In various embodiments as otherwise described herein, the hydrocarbon composition comprises at least one of alkanes, alkenes, and alcohols.

Beyond hydrocarbons, the Fischer-Tropsch product stream can further comprise carbon dioxide and/or water. Accordingly, in various embodiments as otherwise described herein, the Fischer-Tropsch product stream comprises carbon dioxide, and wherein the process further comprises providing at least a portion of the carbon dioxide of the Fischer-Tropsch product stream to the electrolysis feed stream. In various embodiments as otherwise described herein, the Fischer-Tropsch product stream comprises water, and wherein the process comprises providing at least a portion of the water of the Fischer-Tropsch product stream to the water electrolyzer.

In general, longer-chain hydrocarbons are more desirable compared to shorter-chain hydrocarbons. Accordingly, in various embodiments as otherwise described herein, the Fischer-Tropsch product stream comprises C₁-C₄ hydrocarbons, and the process further comprises separating at least a portion of the C₁-C₄ hydrocarbons from the Fischer-Tropsch product stream to provide a light hydrocarbon stream (e.g., the light hydrocarbon stream as otherwise described herein). In various embodiments, the process further comprises providing at least a portion of the light hydrocarbons to a reaction of a light hydrocarbon stream with oxygen as described or to a reaction of the light hydrocarbon stream with water and oxygen. For example, in particular embodiments, the process further comprises oxidizing at least a portion of the light hydrocarbon stream in a partial oxidation reactor to provide a pOX stream comprising CO and/or CO₂, and including at least a portion of the pOX stream in the electrolysis feed stream and/or the H₂/CO feed stream. Additionally or alternatively, in particular embodiments as otherwise described herein, at least a portion of the light hydrocarbon stream may be directed to a steam reforming unit and/or an autothermal reforming unit, such as an electrically heated steam reforming unit to produce a reforming product stream comprising carbon monoxide and hydrogen. The resulting hydrogen and/or carbon oxides may then be included, at least in part, in the SOEC feed steam and/or the H₂/CO stream as otherwise described herein.

The light hydrocarbon stream typically comprises numerous components, including short-chain (e.g., C₁-C₄) saturated hydrocarbons, short-chain olefins, and short-chain oxygenates. In particular, olefins (e.g., ethene, propene, butene) and alcohols, may also be recycled to the Fischer-Tropsch reactor in order to generate additional C₅₊ hydrocarbons. Accordingly, in various embodiments as otherwise described herein, the process further comprises providing at least a portion of the light hydrocarbon stream to the Fischer-Tropsch reactor, for example by adding a portion of the light hydrocarbon stream to the H₂/CO stream.

In various embodiments as otherwise described herein, wherein the process comprises electrolyzing water to produce a hydrogen gas containing stream, the process further comprises activating the Fischer-Tropsch catalyst by contacting it with at least a portion of the hydrogen gas containing stream. In some embodiments, wherein the process comprises electrolyzing water to produce a hydrogen gas containing stream, the process further comprises providing the hydrogen containing stream to a furnace to provide heat to the electrolyzer cell or a Fischer-Tropsch reactor (e.g., the Fischer-Tropsch reactor as otherwise described herein).

Various components of the Fischer-Tropsch product stream may be utilized to generate heat. For example, in some embodiments, the Fischer-Tropsch product stream comprises light hydrocarbons and/or hydrogen gas, and the process further comprises providing at least a portion of the light hydrocarbons and/or hydrogen gas to a furnace to heat the electrolyzer cell and/or a Fischer-Tropsch reactor (e.g., the electrolyzer cell and/or the Fischer-Tropsch reactor as otherwise described herein).

The Fischer-Tropsch catalyst may be selected by the person of ordinary skill in the art. In various embodiments as otherwise described herein, the Fischer-Tropsch catalyst comprises cobalt, iron, rhodium, ruthenium, or a combination thereof (e.g., comprises cobalt or iron). In particular embodiments, the Fischer-Tropsch catalyst comprises cobalt in an amount in the range of 2 to 30 wt%, e.g., in the range of 5 to 25 wt%, or in the range of 8 to 20 wt%, calculated as Co(0). In particular embodiments, the Fischer-Tropsch catalyst comprises iron in an amount in the range of 15 to 95 wt%, e.g., 25 to 95 wt%, or 30 to 90 wt%, calculated as Fe(0). In various embodiments as otherwise described herein, the Fischer-Tropsch catalyst further comprises manganese (e.g., comprises manganese in the amount of 0.1 to 15 wt%, or 1 to 10 wt%).

In various embodiments as otherwise described herein, the Fischer-Tropsch catalyst is a supported catalyst, wherein the support comprises at least one of titanium oxide, zirconium oxide, cerium oxide, aluminum oxide, silicon oxide, magnesium oxide, and zinc oxide (e.g., comprises at least one of titanium oxide, aluminum oxide, and silicon oxide). For example, in particular embodiments, the support is a titanium dioxide support, or is an alumina support, or is a silica support. In various embodiments, the support is a shaped particle, e.g., an extrudate. The catalyst can be prepared using methods conventional in the art.

Prior to use, certain catalysts require activation. In various embodiments as otherwise described herein, the Fischer-Tropsch catalyst is activated in a reductive atmosphere. In various embodiments, the catalyst is substantially reduced to generate a reduced catalyst material that is used in the catalysis of the Fischer-Tropsch reaction. In embodiments wherein the Fischer-Tropsch catalyst comprises cobalt, this process results in at least portion of the cobalt being transformed into cobalt metal. Desirably, the reduction results in at least 50% of the cobalt being provided as cobalt(0). The person of ordinary skill in the art can use conventional methods to reduce cobalt catalyst materials (e.g., cobalt oxide- or cobalt hydroxide-based materials) to metallic form. In various embodiments as otherwise described herein, the first reducing agent is hydrogen gas, H₂. The hydrogen gas may be mixed with other gases, such as an inert carrier gas. Examples of such inert carrier gasses include nitrogen, carbon dioxide, argon, or helium. The hydrogen gas may also be mixed with carbon monoxide, with or without one or more additional carrier gasses. In various embodiments, the reduction is effected by contacting the first catalyst material with a first reducing gas, wherein the first reducing gas comprises the first reducing agent, wherein the first reducing gas comprises at least 50 vol% H₂ (e.g., at least 60 vol%, or at least 70 vol%, or at least 80 vol%, or at least 90 vol%, or at least 95 vol%, or essentially 100 vol% H₂). As noted above, H₂ for reduction can come from the electrolysis of water, and/or H₂ can also be separated and recycled from the Fischer-Tropsch product stream for use in reducing the Fischer-Tropsch catalyst.

The temperature of the Fischer-Tropsch synthesis can suitably be in the range of 200-400 °C, such as 200-300 °C, or 210-400 °C, or 210-300 °C, or 220-400 °C, or 220-300 °C. In various embodiments as otherwise described herein, the temperature of the Fischer-Tropsch synthesis is in the range of 200-250 °C, e.g., or 200-240 °C, or 200-230 °C, or 200-220 °C, or 210-250 °C, or 210-240 °C, or 210-230 °C, or 220-250 °C, or 220-240 °C, or 230-250 °C. The pressure of the reaction may suitably be in the range from 10-50 barg e.g., 20-50 barg, or 25-50 barg, or 10-40 barg, or 20-40 barg, or 25-40 barg or 10-35 barg, or 20-35 barg, or 25-35 barg. In particular embodiments, the contacting of the H₂/CO stream with the Fischer-Tropsch catalyst is performed at a pressure in the range of 20-40 barg.

Subject to the limitations described herein, the person of ordinary skill in the art can adapt conventional Fischer-Tropsch catalysts and processes to arrive at the processes of the disclosure. Suitable techniques for catalyst preparation and hydrocarbon synthesis, especially with regard to the synthesis of C₅₊ hydrocarbons and/or oxygenates, are well-known in the art, for example, described in International Patent Application Publication No. 2019/154885, which is hereby incorporated by reference herein in its entirety.

The water-gas shift reaction is another method to generate H₂ by reacting carbon monoxide with water. The reaction is reversible as well, where carbon dioxide may be reacted with hydrogen to form carbon monoxide and water. Both of these reactions are conventionally used in the art. Advantageously, the presently disclosed process avoids the use of both the water-gas shift reaction and reverse water-gas shift reaction. Accordingly, in various embodiments as otherwise described herein, less than 10% (e.g., less than 5%, or less than 2%) of each of the H₂, CO, and CO₂ of the process are generated by the water-gas shift reaction or reverse water-gas shift reaction, as appropriate. In various processes as disclosed herein, there is no use of a dedicated water-gas shift reactor or reverse water-gas shift reactor (however, as would be appreciated by the person of ordinary skill in the art, the water-gas shift reaction or reverse water-gas shift reaction can operate to a minor degree as a side reaction during certain processes).

It can be desirable to contact the H₂/CO stream, as described herein, with a Fischer-Tropsch catalyst (e.g., in a Fischer-Tropsch reactor) tor product a Fischer-Tropsch product stream to provide a C₅₊ hydrocarbon product stream, i.e., that contains at least 70 wt% C₅₊ hydrocarbons, e.g., at least 80 wt% C₅₊, e.g., at least 85 wt% C₅₊ hydrocarbons. As the person of ordinary skill in the art will appreciate, this can be performed by separating out at least a portion of other components, such as C₁-C₄ hydrocarbons, CO, CO₂ and H₂, e.g., as described above.

Moreover, it can be desirable in some cases to perform further transformations on the C₅₊ hydrocarbon product stream. Hydroprocessing, i.e., contacting the C₅₊ hydrocarbon product stream of the Fischer-Tropsch product stream with hydrogen and a hydroprocessing catalyst, can be used for this purpose. Accordingly, in various embodiments, a process as otherwise described herein includes hydroprocessing the C₅₊ hydrocarbon product stream by contacting the C₅₊ hydrocarbon product stream with hydrogen and a hydroprocessing catalyst. A variety of hydroprocessing process steps may be used. For example hydrocracking can be used to provide products with lower molecular weight, e.g., to convert higher molecular weight waxes to lower molecular weight products for use as fuels such as aviation fuel, diesel fuel or gasoline. Hydrodeoxygenation can be used to convert oxygenates to non-oxygenated hydrocarbons. Hydroprocessing can also be used to convert olefins to alkanes. Hydroisomerization may be used to alter the mix of hydrocarbon isomers. At least a portion of the H₂ used in the hydroprocessing can be H₂ separated from one or more of the product streams as described above.

As the person of ordinary skill in the art will appreciate, the Fischer-Tropsch processes described herein can be used to provide a variety of end products. For example, in various embodiments as otherwise described herein, one or more products are provided from at least a portion of C₅₊ hydrocarbons of the third product stream. The one or more products can be, for example, one or more of a fuel (e.g., a diesel fuel, a gasoline, or an aviation fuel), a wax or an oil (e.g., for use in lubrication or metalworking).

The processes described herein can be performed with high throughputs. For example, in various embodiments as otherwise described herein, the SOEC electrolysis, water electrolysis, and/or Fischer-Tropsch synthesis is conducted at a GHSV in the range of 2000 hr⁻¹ to 20,000 hr⁻¹. For example, in various such embodiments the contacting is conducted at a GHSV in the range of 4000 hr⁻¹ to 18,000 hr⁻¹, or 6000 hr⁻¹ to 16,000 hr⁻¹, or 8000 hr⁻¹ to 12,000 hr⁻¹, or 2000 hr⁻¹ to 12,000 hr⁻¹, or 4000 hr⁻¹ to 10,000 hr⁻¹, or 6000 hr⁻¹ to 10,000 hr⁻¹, or 2000 hr⁻¹ to 8,000 hr⁻¹, or 4000 hr⁻¹ to 8,000 hr⁻¹, or 2000 hr⁻¹ to 6000 hr⁻¹. Of course, depending on the system, higher and lower space velocities may also be used.

An example embodiment is shown in schematic view in FIG. 1. Here, in process 100, electrolysis feed stream 111 is conducted to an electrolysis reaction zone 110 and contacted with an electrolyzer cell 113 to form an electrolysis product stream 112 comprising carbon monoxide. The product stream 112 is conducted from the electrolysis reaction zone 110. In water electrolysis reactor 120, water is electrolyzed to form hydrogen gas stream 121 which is added to the product stream 112 added, and the resulting mixture is provided as H₂/CO stream 122. H₂/CO stream 122 is conducted to Fischer-Tropsch reaction zone 130 in which Fischer-Tropsch catalyst 123 resides to provide Fischer-Tropsch product stream 124. A H₂ steam 125 from electrolysis reactor 120 may be provided to activate the Fischer-Tropsch catalyst 123. Notably, at least a portion of CO₂ of the Fischer-Tropsch product stream 124 can be separated and recycled to the electrolysis feed stream 111 via CO₂ recycle 126. A light hydrocarbon stream 141 is separated therefrom and conducted to partial oxidation unit 140. The partial oxidation unit, as the person of ordinary skill in the art would appreciate, oxidizes the light hydrocarbons to provide CO2 and CO; at least a portion of CO₂ generated from the partial oxidation unit 140 is included in the electrolysis feed stream 111 via CO₂ stream 142. Water separated from the Fischer-Tropsch product stream 124 is recycled to the water electrolysis reactor 120 through water recycle stream 127.

Various exemplary embodiments of the disclosure include, but are not limited to the enumerated embodiments listed below, which can be combined in any number and in any combination that is not technically or logically inconsistent.
Embodiment 1. A process for producing an H₂/CO stream comprising hydrogen and carbon monoxide, the process comprising:
   providing an electrolysis feed stream comprising carbon dioxide;
   electrolyzing carbon dioxide of the electrolysis feed stream in an electrolyzer cell to form carbon monoxide;
   electrolyzing water to form hydrogen gas;
   providing a H₂/CO stream comprising at least a portion of the carbon monoxide from the electrolysis of carbon dioxide and at least a portion of the hydrogen gas from the electrolysis of water to a syngas conversion reactor (e.g., a Fischer-Tropsch reactor).
Embodiment 2. The process of embodiment 1, wherein the electrolyzer cell comprises one or more of a solid oxide electrolyzer cell, a proton exchange membrane (PEM) electrolyzer cell, an alkaline electrolyzer cell, and an anion exchange membrane (AEM) electrolyzer cell.
Embodiment 3. The process of embodiment 1, wherein the electrolyzer cell is selected from solid oxide electrolyzer cell, a proton exchange membrane (PEM) electrolyzer cell, an alkaline electrolyzer cell, or an anion exchange membrane (AEM) electrolyzer cell.
Embodiment 4. The process of embodiment 1, wherein the electrolyzer cell is a solid oxide electrolyzer cell.
Embodiment 5. The process of embodiment 4, wherein the solid oxide electrolyzer cell comprises an anode, a cathode, and a solid oxide electrolyte disposed between the anode and the cathode.
Embodiment 6. The process of embodiment 5, wherein the electrolyte of the solid oxide electrolyzer cell comprises one or more of yttrium-stabilized zirconia, scandia-stabilized zirconia, a ceria-based electrolyte or a lanthanum gallate material.
Embodiment 7. The process of embodiment 5 or embodiment 6, wherein the cathode of the solid oxide electrolyzer cell comprises one or more of a doped yttrium-stabilized zirconia (e.g., nickel-doped yttrium-stabilized zirconia); perovskite-type lanthanum strontium manganese, lanthanum strontium manganese chromate, and scandium-doped lanthanum strontium manganese chromate.
Embodiment 8. The process of any of embodiments 5-7, wherein the anode of the solid oxide electrolyzer cell comprises one or more of lanthanum strontium manganate and neodymium nickelate.
Embodiment 9. The process of embodiment 1, wherein the electrolyzer cell is a proton exchange membrane (PEM) electrolyzer cell.
Embodiment 10. The process of embodiment 9, wherein the PEM electrolyzer cell comprises an anode, a cathode, and a proton-exchange membrane disposed between the anode and the cathode.
Embodiment 11. The process of embodiment 1, wherein the electrolyzer cell is an alkaline electrolyzer cell.
Embodiment 12. The process of = embodiment 11, wherein the alkaline electrolyzer cell comprises an anode, a cathode, and a liquid alkaline solution disposed between the anode and the cathode.
Embodiment 13. The process of embodiment 1, wherein the electrolyzer cell is an anion exchange membrane (AEM) electrolyzer cell.
Embodiment 14. The process of embodiment 13, wherein the AEM electrolyzer cell comprises an anode, a cathode, and an anion exchange membrane disposed between the anode and the cathode.
Embodiment 15. The process of any of embodiments 1-14, wherein the electrolyzing of the carbon dioxide, the electrolyzing of the water, or both is performed using electricity from a renewable source.
Embodiment 16. The process of any of embodiments 1-15, wherein the carbon dioxide of the electrolysis feed stream comprises one or more of captured carbon dioxide, carbon dioxide from biogas, and carbon dioxide from an emission source.
Embodiment 17. The process of any of embodiments 1-16, wherein the carbon dioxide of the electrolysis feed stream comprises at least 50%, at least 75%, at least 90%, or at least 95% captured carbon dioxide.
Embodiment 18. The process of any of embodiments 1-16, wherein the carbon dioxide of the electrolysis feed stream comprises at least 50%, at least 75%, at least 90%, or at least 95% carbon dioxide from biogas.
Embodiment 19. The process of any of embodiments 1-16, wherein the carbon dioxide of the electrolysis feed stream comprises at least 50%, at least 75%, at least 90%, or at least 95% carbon dioxide from an emission source.
Embodiment 20. The process of any of embodiments 1-19, wherein the electrolysis feed stream comprises no more than 20 vol% carbon monoxide, e.g., no more than 10 vol%, or no more than 5 vol%, or no more than 3 vol%, or no more than 1 vol% carbon monoxide.
Embodiment 21. The process of any of embodiments 1-20, wherein at least 50 vol% of the of the electrolysis feed stream is carbon dioxide, methane and/or nitrogen, e.g., in a total amount of at least 60 vol%, at least 70 vol%, at least 80 vol%, or at least 90 vol%.
Embodiment 22. The process of any of embodiments 1-21, wherein the contacting the electrolysis feed stream with a electrolyzer cell is performed at a temperature in the range of 400 °C to 1000 °C, (e.g., in the range of 400°C to 700°C, or 400°C to 800°C, or 400°C to 900°C, or 450°C to 700°C, or 450°C to 800°C, or 450°C to 900°C, or 450°C to 1000°C, or 500°C to 700°C, or 500°C to 800°C, or 500°C to 900°C, or 500°C to 1000°C, or 550°C to 700°C, or 550°C to 800°C, or 550°C to 900°C, or 550°C to 1000°C, or 600°C to 700°C, or 600°C to 800°C).
Embodiment 23. The process of any of embodiments 1-22, wherein the contacting the electrolysis feed stream with the electrolyzer cell is performed at a pressure in a range of from 0.1 to 60 barg.
Embodiment 24. The process of any of embodiments 1-23, wherein the contacting the electrolyzer feed stream with the electrolyzer cell is performed with a selectivity for carbon monoxide of at least 50% (e.g., at least 60%, or at least 70%, or at least 80%).
Embodiment 25. The process of any of embodiments 1-24, wherein the contacting the electrolyzer feed stream with the electrolyzer cell is performed with a carbonate and/or oxalate selectivity of no more than 30%, e.g., no more than 25%, or no more than 20%, or no more than 15%, or no more than 10%, or no more than 5%.
Embodiment 26. The process of any of embodiments 1-25, further comprising providing carbon monoxide from a secondary source (e.g., a fossil source) in the H₂/CO stream.
Embodiment 27. The process of any of embodiments 1-26, wherein the electrolysis feed stream further comprises water, and wherein at least a portion of the electrolysis of water is performed in the electrolyzer cell.
Embodiment 28. The process of any of embodiments 27, wherein at least a portion of the electrolysis of water and at least a portion of the electrolysis of carbon dioxide is performed in the same (e.g., in a single) electrolyzer cell.
Embodiment 29. The process of any of embodiments 1-26, wherein at least a portion of the electrolysis of water is performed in a water electrolyzer separate from the electrolyzer cell.
Embodiment 30. The process of any of embodiments 1-29, further comprising providing hydrogen from a secondary source (e.g., a fossil source) in the H₂/CO stream.
Embodiment 31. The process of any of embodiments 1-30, wherein the H₂/CO stream has a H₂:CO ratio in the range of 1:1 to 3:1, e.g., 1.5:1 to 3:1.
Embodiment 32. The process of any of embodiments 1-31, further comprising separating water from the H₂/CO stream or from a carbon-monoxide-containing effluent of the electrolyzer.
Embodiment 33. The process of embodiment 32, further comprising recycling the separated water to the water electrolyzer.
Embodiment 34. The process of any of embodiments 1-33, wherein the H₂/CO stream has a water content of no more than 10 wt%.
Embodiment 35. The process of any of embodiments 1-34, wherein the H₂/CO stream comprises methane in an amount in the range of 0.1 vol% to 50 vol%, e.g., in the range of 1 vol% to 50 vol%, or 5 vol% to 40 vol%.
Embodiment 36. The process of any of embodiments 1-35, wherein the H₂/CO stream comprises carbon dioxide in an amount in the range of 0.1 vol% to 50 vol%, e.g., in the range of 1 vol% to 50 vol%, or 5 vol% to 40 vol%.
Embodiment 37. The process of any of embodiments 1-36, wherein the process further comprises reacting a light hydrocarbon stream with oxygen (e.g., in a partial oxidation reactor, in a steam methane reforming reactor, or in an autothermal reforming reactor) to produce an oxidation product stream comprising carbon monoxide and hydrogen.
Embodiment 38. The process of embodiment 37, wherein the process comprises electrolyzing water to produce hydrogen and oxygen, and wherein at least a portion of the oxygen from the electrolysis is provided to the reaction of the light hydrocarbon stream with oxygen.
Embodiment 39. The process of embodiment 37 or embodiment 38, wherein electrolyzing carbon dioxide of the electrolysis feed stream in a electrolyzer cell forms oxygen, and wherein at least a portion of the oxygen from the electrolyzing carbon dioxide of the electrolysis feed stream is provided to the reaction of the light hydrocarbon stream with oxygen.
Embodiment 40. The process of any of embodiments 37-39, wherein the oxidation product stream comprises carbon dioxide, wherein the process further comprises providing at least a portion of the carbon dioxide of the oxidation product stream to the electrolysis feed stream.
Embodiment 41. The process of any of embodiments 37-40, wherein the partial oxidation produces energy, the process further comprising directing the energy to at least one of a Fischer-Tropsch synthesis, a separation process, or an electrolysis process.
Embodiment 42. The process of any of embodiments 1-14, wherein the process further comprises reacting a light hydrocarbon stream with water in a steam reforming reactor to produce a reforming product stream comprising carbon monoxide.
Embodiment 43. The process of any of embodiments 1-42, further comprising reacting a light hydrocarbon stream with water and oxygen (e.g., in a combined steam reforming reactor and partial oxidation reactor, such as an autothermal reformer) to produce a reforming product stream comprising carbon monoxide and hydrogen.
Embodiment 44. The process of embodiment 42 or embodiment 43, further comprising including at least a portion of the carbon monoxide of the reforming product stream and/or at least a portion of the hydrogen of the reforming product stream to the H₂/CO stream.
Embodiment 45. The process of any of embodiments 37-44, wherein the light hydrocarbon stream comprises methane from biogas.
Embodiment 46. The process of embodiment 45, comprising providing a biogas comprising carbon dioxide and methane, and providing at a least a portion of the carbon dioxide to the electrolysis feed stream, and at least a portion of the methane to the reaction of the light hydrocarbon stream with oxygen or to the reaction of the light hydrocarbon stream with water and oxygen.
Embodiment 47. A process for the production of hydrocarbons, the process comprising
   providing an H₂/CO stream containing hydrogen and carbon monoxide according to the process of any of embodiments 1-46;
   contacting the H₂/CO stream with a Fischer-Tropsch catalyst (e.g., in a Fischer-Tropsch reactor) to produce a Fischer-Tropsch product stream comprising C₅₊ hydrocarbons.
Embodiment 48. The process of embodiment 47, wherein the Fischer-Tropsch product stream comprises carbon dioxide, and wherein the process further comprises providing at least a portion of the carbon dioxide of the Fischer-Tropsch product stream to the electrolysis feed stream.
Embodiment 49. The process of embodiments 47 or 48, wherein the Fischer-Tropsch product stream comprises water, and wherein the process comprises providing at least a portion of the water of the Fischer-Tropsch product stream to the water electrolyzer.
Embodiment 50. The process of any of embodiments 47-49, further comprising separating light hydrocarbons (e.g., C1-C4 hydrocarbons) from the Fischer-Tropsch product stream.
Embodiment 51. The process of embodiment 50, further comprising providing at least a portion of the light hydrocarbons to a reaction of a light hydrocarbon stream with oxygen as described or to a reaction of the light hydrocarbon stream with water and oxygen.
Embodiment 52. The process of any of embodiments 47-51, wherein the process comprises electrolyzing water to produce a hydrogen gas containing stream, the process further comprising activating the Fischer-Tropsch catalyst by contacting it with at least a portion of the hydrogen gas containing stream.
Embodiment 53. The process of any of embodiments 47-52, wherein the Fischer-Tropsch product stream comprises light hydrocarbons and/or hydrogen gas, the process further comprising providing at least a portion of the light hydrocarbons and/or hydrogen gas to a furnace to heat the electrolyzer cell and/or a Fischer-Tropsch reactor.
Embodiment 54. The process of any of embodiments 47-53, wherein the Fischer-Tropsch catalyst is a cobalt-containing supported Fischer-Tropsch catalyst or an iron-containing supported Fischer-Tropsch catalyst.
Embodiment 55. The process of embodiment 54, wherein the Fischer-Tropsch catalyst comprises alumina, ceria, silica, titania, zinc oxide, or zirconia as a support (e.g., comprises titania as a support).
Embodiment 56. The process of any of embodiments 47-55, wherein the Fischer-Tropsch catalyst comprises cobalt in an amount of at least 1 wt%, e.g., in the range of 1 wt% to 20 wt% on an elemental basis.
Embodiment 57. The process of any of embodiments 47-46, wherein the Fischer-Tropsch catalyst comprises manganese in an amount of at least 0.5 wt%, e.g., in the range of 0.5 wt% to 10 wt% on an elemental basis.
Embodiment 58. The process of any of embodiments 1-57, comprising electrolyzing water to produce a hydrogen gas containing stream, and providing the hydrogen containing stream to a furnace to provide heat to the electrolyzer cell and/or a Fischer-Tropsch reactor (e.g., the Fischer-Tropsch reactor of any of embodiments 35-45).
Embodiment 59. The process of any of embodiments 1-58, wherein less than 10% (e.g., less than 5%, or less than 2%) of each of the H₂, CO, and CO₂ of the process are generated by the water-gas shift reaction or reverse water-gas shift reaction, as appropriate.
Embodiment 60. A process for the conversion of an H₂/CO stream, the process comprising
   providing an H₂/CO stream containing hydrogen and carbon monoxide according to the process of any of embodiments 1-46;
   converting the H₂/CO stream via a syngas conversion reaction.
Embodiment 61. The process of embodiment 60, wherein the syngas conversion reaction is a methanol synthesis.
Embodiment 62. The process of embodiment 60, wherein the syngas conversion reaction is metal reduction (e.g., an iron reduction).
Embodiment 63. The process of embodiment 60, wherein the syngas conversion is an oxidation (e.g., in a turbine for the generation of electrical power).

The particulars shown herein are by way of example and for purposes of illustrative discussion of various embodiments of the present disclosure only and are presented in the cause of providing what is believed to be the most useful and readily understood description of the principles and conceptual aspects of various embodiments of the disclosure. In this regard, no attempt is made to show details associated with the methods of the disclosure in more detail than is necessary for the fundamental understanding of the methods described herein, the description taken with the examples making apparent to those skilled in the art how the several forms of the methods of the disclosure may be embodied in practice. Thus, before the disclosed processes and devices are described, it is to be understood that the aspects described herein are not limited to specific embodiments, apparatus, or configurations, and as such can, of course, vary. It is also to be understood that the terminology used herein is for the purpose of describing particular aspects only and, unless specifically defined herein, is not intended to be limiting.

The terms "a," "an," "the" and similar referents used in the context of describing the methods of the disclosure (especially in the context of the following embodiments and claims) are to be construed to cover both the singular and the plural, unless otherwise indicated herein or clearly contradicted by context.

All methods described herein can be performed in any suitable order of steps unless otherwise indicated herein or otherwise clearly contradicted by context. The use of any and all examples, or exemplary language (e.g., "such as") provided herein is intended merely to better illuminate the methods of the disclosure and does not pose a limitation on the scope of the disclosure. No language in the specification should be construed as indicating any non-claimed element essential to the practice of the methods of the disclosure.

Unless the context clearly requires otherwise, throughout the description and the claims, the words 'comprise', 'comprising', and the like are to be construed in an inclusive sense as opposed to an exclusive or exhaustive sense; that is to say, in the sense of "including, but not limited to". Words using the singular or plural number also include the plural and singular number, respectively. Additionally, the words "herein," "above," and "below" and words of similar import, when used in this application, shall refer to this application as a whole and not to any particular portions of the application.

As will be understood by one of ordinary skill in the art, each embodiment disclosed herein can comprise, consist essentially of or consist of its particular stated element, step, ingredient or component. As used herein, the transition term "comprise" or "comprises" means includes, but is not limited to, and allows for the inclusion of unspecified elements, steps, ingredients, or components, even in major amounts. The transitional phrase "consisting of" excludes any element, step, ingredient or component not specified. The transition phrase "consisting essentially of" limits the scope of the embodiment to the specified elements, steps, ingredients or components and to those that do not materially affect the embodiment.

All percentages, ratios and proportions herein are by weight, unless otherwise specified.

Notwithstanding that the numerical ranges and parameters setting forth the broad scope of the disclosure are approximations, the numerical values set forth in the specific examples are reported as precisely as possible. Any numerical value, however, inherently contains various errors necessarily resulting from the standard deviation found in their respective testing measurements.

Groupings of alternative elements or embodiments of the disclosure are not to be construed as limitations. Each group member may be referred to and claimed individually or in any combination with other members of the group or other elements found herein. It is anticipated that one or more members of a group may be included in, or deleted from, a group for reasons of convenience and/or patentability. When any such inclusion or deletion occurs, the specification is deemed to contain the group as modified thus fulfilling the written description of all Markush groups used in the appended claims.

Some embodiments of various aspects of the disclosure are described herein, including the best mode known to the inventors for carrying out the methods described herein. Of course, variations on these described embodiments will become apparent to those of ordinary skill in the art upon reading the foregoing description. The skilled artisan will employ such variations as appropriate, and as such the methods of the disclosure can be practiced otherwise than specifically described herein. Accordingly, the scope of the disclosure includes all modifications and equivalents of the subject matter recited in the claims appended hereto as permitted by applicable law. Moreover, any combination of the above-described elements in all possible variations thereof is encompassed by the disclosure unless otherwise indicated herein or otherwise clearly contradicted by context.

The phrase "at least a portion" as used herein is used to signify that, at least, a fractional amount is required, up to the entire possible amount.

In closing, it is to be understood that the various embodiments herein are illustrative of the methods of the disclosures. Other modifications that may be employed are within the scope of the disclosure. Thus, by way of example, but not of limitation, alternative configurations of the methods may be utilized in accordance with the teachings herein. Accordingly, the methods of the present disclosure are not limited to that precisely as shown and described.

## Claims

1. A process for producing an H₂/CO stream comprising hydrogen and carbon monoxide, the process comprising:
providing an electrolysis feed stream comprising carbon dioxide;
electrolyzing carbon dioxide of the electrolysis feed stream in an electrolyzer cell to form carbon monoxide;
electrolyzing water to form hydrogen gas;
providing a H₂/CO stream comprising at least a portion of the carbon monoxide from the electrolysis of carbon dioxide and at least a portion of the hydrogen gas from the electrolysis of water to a syngas conversion reactor (e.g., a Fischer-Tropsch reactor).

2. The process of claim 1, wherein the electrolyzer cell comprises one or more of a solid oxide electrolyzer cell, a proton exchange membrane (PEM) electrolyzer cell, an alkaline electrolyzer cell, and an anion exchange membrane (AEM) electrolyzer cell.

3. The process of claim 1, wherein the electrolyzer cell is a solid oxide electrolyzer cell.

4. The process of any of claims 1-3, wherein the carbon dioxide of the electrolysis feed stream comprises one or more of captured carbon dioxide, carbon dioxide from biogas, and carbon dioxide from an emission source.

5. The process of any of claims 1-4, wherein the carbon dioxide of the electrolysis feed stream comprises at least 50%, at least 75%, at least 90%, or at least 95% carbon dioxide from biogas.

6. The process of any of claims 1-5, wherein the contacting the electrolyzer feed stream with the electrolyzer cell is performed with a selectivity for carbon monoxide of at least 50% (e.g., at least 60%, or at least 70%, or at least 80%), and/or wherein the contacting the electrolyzer feed stream with the electrolyzer cell is performed with a carbonate and/or oxalate selectivity of no more than 30%, e.g., no more than 25%, or no more than 20%, or no more than 15%, or no more than 10%, or no more than 5%.

7. The process of any of claims 1-6, wherein the electrolysis feed stream further comprises water, and wherein at least a portion of the electrolysis of water is performed in the electrolyzer cell.

8. The process of any of claims 7, wherein at least a portion of the electrolysis of water and at least a portion of the electrolysis of carbon dioxide is performed in the same (e.g., in a single) electrolyzer cell.

9. The process of any of claims 1-8, further comprising separating water from the H₂/CO stream or from a carbon-monoxide-containing effluent of the electrolyzer.

10. The process of claim 9, further comprising recycling the separated water to the water electrolyzer.

11. The process of any of claims 1-10, wherein the process further comprises reacting a light hydrocarbon stream with oxygen (e.g., in a partial oxidation reactor, in a steam methane reforming reactor, or in an autothermal reforming reactor) to produce an oxidation product stream comprising carbon monoxide and hydrogen.

12. The process of claim 11, wherein the process comprises electrolyzing water to produce hydrogen and oxygen, and wherein at least a portion of the oxygen from the electrolysis is provided to the reaction of the light hydrocarbon stream with oxygen.

13. The process of any of claims 1-13, wherein the process further comprises reacting a light hydrocarbon stream with water in a steam reforming reactor to produce a reforming product stream comprising carbon monoxide.

14. A process for the production of hydrocarbons, the process comprising
providing an H₂/CO stream containing hydrogen and carbon monoxide according to the process of any of claims 1-13;
contacting the H₂/CO stream with a Fischer-Tropsch catalyst (e.g., in a Fischer-Tropsch reactor) to produce a Fischer-Tropsch product stream comprising C₅₊ hydrocarbons.

15. A process for the conversion of an H₂/CO stream, the process comprising
providing an H₂/CO stream containing hydrogen and carbon monoxide according to the process of any of claims 1-13;
converting the H₂/CO stream via a syngas conversion reaction.
